# EUROPÄISCHE PATENTANMELDUNG

(11) **EP 1 328 107 A1**
(43) Veröffentlichungstag der Anmeldung: **16.07.2003**
(21) Anmeldenummer: 02000724.1
(22) Anmeldetag: 11.01.2002
(51) Int. Cl.: H04M 3/42, H04M 3/51, H04M 3/523

(54) **Verfahren zum Ermitteln eines Diensterbringungsprogramms, zugehörige Einheiten und zugehöriges Programm**

(71) Anmelder: SIEMENS AKTIENGESELLSCHAFT, 80333 München (DE)
(72) Erfinder: Henz, Volker, 85764 Oberschleissheim (DE)

(57) **Zusammenfassung**

Die Erfindung betrifft unter anderem ein Verfahren, bei dem einem Endgerät (16) ein Kennzeichen (EG1ID) zugeordnet wird, das unabhängig von einer das Endgerät (16) bedienenden Bedienperson (OP1) ist. In einer vermittlungstechnischen Einrichtung (22) wird mit Hilfe des Kennzeichens (EG1ID) ein Diensterbringungsprogramm (44) ermittelt, mit dessen Hilfe sich ein Kommunikationsdienst von dem Endgerät (16) aus nutzen lässt. Für das ermittelte Diensterbringungsprogramm (44) werden dann Einstellungen abhängig von der das Endgerät (16) bedienenden Bedienperson vorgenommen.

## Beschreibung

Die Erfindung betrifft ein Verfahren zum Ermitteln eines Diensterbringungsprogramms, das einen Kommunikationsdienst für ein Endgerät erbringt.

Das Diensterbringungsprogramm ist an das Endgerät angepasst und erbringt Kommunikationsdienste nach dem Client-Server-Prinzip. Beispiele für Kommunikationsdienste sind die Übertragung von Sprachdaten im Rahmen der Telefonie oder eine Anrufverteilung.

Es ist Aufgabe der Erfindung, zum Ermitteln eines Diensterbringungsprogramms ein einfaches Verfahren anzugeben, das die Einführung neuer Leistungsmerkmale oder die Nutzung bekannter Leistungsmerkmale in einem größeren Anwendungsbereich ermöglicht. Außerdem sollen ein zugehöriges Endgerät, eine zugehörige vermittlungstechnische Einrichtung und ein zugehöriges Programm angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Beim erfindungsgemäßen Verfahren wird dem Endgerät ein Kennzeichen zugeordnet, das unabhängig von einer das Endgerät bedienenden Bedienperson ist. Das Kennzeichen wird vom Endgerät zu einer vermittlungstechnischen Einrichtung übertragen. Abhängig vom Kennzeichen wird in der vermittlungstechnischen Einrichtung ein Diensterbringungsprogramm ermittelt, das einen Kommunikationsdienst für das Endgerät erbringt und sowohl für den Typ des Endgerätes als auch für dieses spezielle Endgerät in einem Konfigurationsvorgang angepasst worden ist. Für das Diensterbringungsprogramm werden abhängig von der das Endgerät bedienenden Bedienperson Einstellungen vorgenommen. Diese Einstellungen betreffen beispielsweise die Rufnummer, unter der das Endgerät erreichbar ist, die für das Endgerät freigeschalteten Leistungsmerkmale oder Vergebührungsinformationen.

Durch das erfindungsgemäße Verfahren wird es möglich, neue Leistungsmerkmale zu definieren und die dazugehörigen Funktionseinheiten zu bauen. Außerdem lassen sich, wie unten im Zusammenhang mit Weiterbildungen erläutert, auch bekannte Leistungsmerkmale auf einen größeren Anwendungsbereich übertragen, z.B. das Leistungsmerkmal freie Platzwahl auch für Endgeräte, die in einem Datenpaketübertragungsnetz liegen, und denen kein fester Anschluss in einer vermittlungstechnischen Einrichtung zugeordnet ist.

Bei einer Weiterbildung des erfindungsgemäßen Verfahrens wählt die Bedienperson das Endgerät unter mindestens zwei Endgeräten aus, für die die Bedienperson eine freie Platzwahl für die Nutzung eines Kommunikationsdienstes hat. Eine freie Platzwahl wird auch als "free seating feature" bezeichnet. Beispielsweise lässt sich der Kommunikationsdienst gleichermaßen von zwei Endgeräten aus nutzen, z.B. von einem Endgerät in einer Firma und von einem Endgerät zu Hause.

Bei einer nächsten Weiterbildung des erfindungsgemäßen Verfahrens ist der Kommunikationsdienst eine Anrufverteilfunktion, die unter einer Sammelrufnummer eintreffende Anrufe an mindestens ein Endgerät einer Gruppe von Endgeräten weiterleitet, zu der auch das durch die Bedienperson genutzte Endgerät gehört. Die Anrufverteilfunktion wird auch als Automatic Call Distribution (ACD) bezeichnet.

Bei einer nächsten Weiterbildung wird in der vermittlungstechnischen Einrichtung ein Übertragungskanal mit einem anderen Übertragungskanal verschaltet, der von dem Endgerät kommt oder zu dem Endgerät führt. Das Endgerät ist bei der Weiterbildung ein Endgerät eines Datenpaketübertragungsnetzes, zu dem über den Anschluss unter Zwischenschaltung einer Netzübergangseinheit Nutzdaten gesendet werden und/oder das zu dem Diensterbringungsrechnern unter Zwischenschaltung einer Netzübergangseinheit Nutzdaten sendet. Bei der Weiterbildung werden zwei grundsätzlich verschiedene Vermittlungsarten verbunden. Während bei einer Durchschaltevermittlung auf allen Protokollebenen Verbindungen aufgebaut werden, gibt es bei der Übertragung von Datenpaketen Verbindungen nur auf oberen Protokollebenen. Die Datenpakete enthalten jeweils eine Zieladresse, so dass auf unteren Protokollebenen eine Weiterleitung der Datenpakete ohne den Aufbau von Verbindungen möglich ist. Durch die Weiterbildung wird erreicht, dass beispielsweise für das durchschaltevermittelte Telefonnetz festgelegte Verfahren im Wesentlichen unverändert auch dann eingesetzt werden können, wenn das Endgerät in einem Datenpaketübertragungsnetz liegt. Insbesondere wird die Einbeziehung von endgerätespezifischen Diensterbringungsprogrammen beibehalten, die im durchschaltevermittelten Netz mit einer Reihe von Vorteilen verbunden ist, beispielsweise mit einfachen Signalisierungsverfahren.

Bei einer anderen Weiterbildung ist das Diensterbringungsprogramm eine Instanz eines Programms. Dabei wird eine Befehlsfolge durch mehrere Instanzen genutzt. Jeder Instanz sind ihre eigenen Daten zugeordnet. Außerdem wird für jede Instanz der aktuelle Ausführungszustand vermerkt.

Bei einer Weiterbildung des erfindungsgemäßen Verfahrens wird vom Endgerät zu der vermittlungstechnischen Einrichtung eine Rufnummer übertragen, unter der das Endgerät erreichbar ist. Die übertragene Rufnummer wird dem Diensterbringungsprogramm zugeordnet. Alternativ oder kumulativ ist die Rufnummer einer Bedienperson zugeordnet. Durch die Weiterbildung wird erreicht, dass trotz einer freien Platzwahl die Bedienperson unter einer gleichbleibenden Rufnummer erreichbar ist. Außerdem sind viele Leistungsmerkmale an Rufnummern gebunden, z.B. die Vergebührung.

Bei einer Weiterbildung wird an das ermittelte Diensterbringungsprogramm eine von dem Endgerät kommende Signalisierungsnachricht weitergeleitet, die ein Signalisierungsdatum enthält, das für ein Leistungsmerkmal festgelegt worden ist. Damit werden Signalisierungsnachrichten dem Diensterbringungsprogramm auf einfache Art und Weise zugewiesen.

Bei einer nächsten Weiterbildung wird das Kennzeichen im Endgerät gespeichert und im Zusammenhang mit einem Anmeldevorgang einer Bedienperson zur Nutzung des Kommunikationsdienstes zur vermittlungstechnischen Einrichtung übertragen. Da das Kennzeichen unabhängig von der Bedienperson ist, wird durch die Weiterbildung die Bedienperson nicht mit der Eingabe dieses Kennzeichens belastet.

Bei einer anderen Weiterbildung wird das Kennzeichen im Datenpaketübertragungsnetz in einem Signalisierungsdatum übertragen, das im Datenpaketübertragungsnetz nicht ausgewertet wird. In diesem Zusammenhang spricht man auch von einem sogenannten Tunneln bzw. von einer transparenten Datenübertragung.

Ist die Signalisierungsnachricht bei einer nächsten Weiterbildung eine Signalisierungsnachricht gemäß einem Protokoll der zum Standard H.323 der ITU-T (International Telecommunication Union - Telecommunication Sector) gehörenden Protokollgruppe, so wird das Signalisierungsdatum in einem Informationselement übertragen, das im Standard H.225.0, 02/98, Annex H, H.323 UU-PDU, als "nonStandardControl" bezeichnet wird. Ein Datenfeld "nonStandardData" ist nämlich oft schon zum Transport von anderen Signalisierungsnachrichten zur Erbringung des Kommunikationsdienstes belegt. Durch die Weiterbildung wird auf eine einfache Art eine standardgerechte Weiterleitung erreicht.

Bei einer nächsten Weiterbildung ist das Kennzeichen eine Identifikation für ein im Endgerät genutztes Programm oder für eine im Endgerät genutzte Hardware. Beispielsweise ist das Kennzeichen eine sogenannte Konsolen-ID (Identification) von Konsolenprogrammen. Die Firma Siemens AG bietet beispielsweise die Konsolenprogramme MAC (Multifunctional Attended Console) und MSB (Multifunction Switch Board) an, mit deren Hilfe an dem Endgerät ein sogenannter Agentenarbeitsplatz im Rahmen einer Anrufverteilung eingerichtet werden kann.

Die Erfindung betrifft außerdem ein Endgerät, eine vermittlungstechnische Einrichtung und ein Programm, mit deren Hilfe das erfindungsgemäße Verfahren oder eine seiner Weiterbildungen ausgeführt werden. Die oben genannten technischen Wirkungen gelten deshalb auch für das Endgerät, für die vermittlungstechnische Einrichtung und für das Programm.

Im Folgenden werden Ausführungsbeispiele der Erfindung an Hand der beiliegenden Zeichnungen erläutert. Darin zeigen:
- Figur 1: für eine Anrufverteilung genutzte Einheiten im Internet und in einem Telefonnetz,
- Figur 2: Nachrichten zur Anmeldung eines Operators bei einem Anrufverteilungsprogramm, und
- Figur 3: Nachrichten, mit denen der Empfang einer Anforderung zur Anmeldung bestätigt wird.

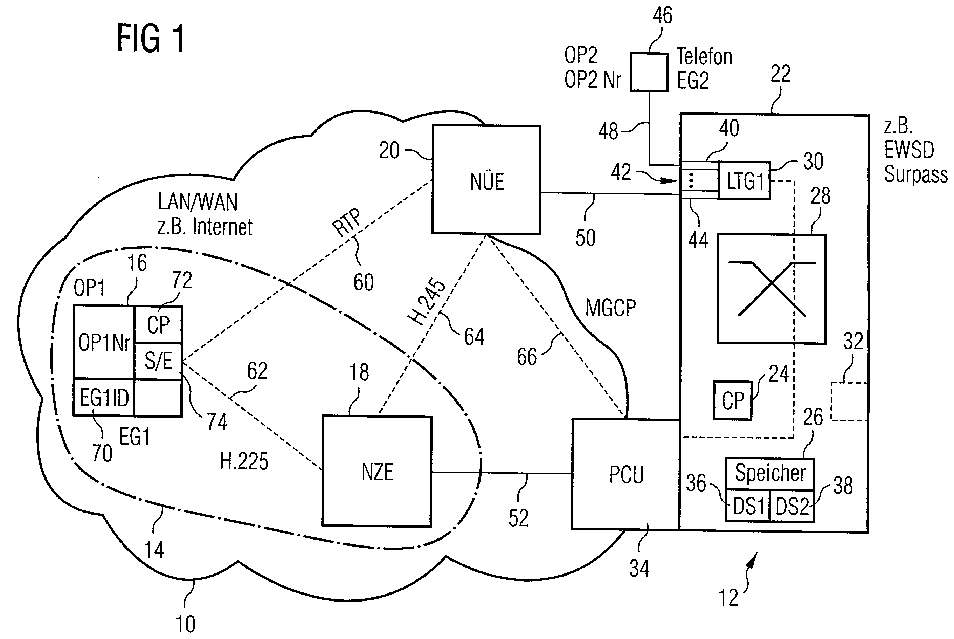

Figur 1 zeigt für eine Anrufverteilung genutzte Einheiten im Internet 10 und in einem durchschaltevermittelten Telefonnetz 12. Im Internet 10 werden Datenpakete gemäß Internetprotokoll übertragen, auf unteren Protokollebenen beispielsweise gemäß Protokoll TCP (Transmission Control Protocol). Auf oberen Protokollebenen werden beispielsweise Protokolle der Protokollgruppe H.323 eingesetzt, insbesondere die Protokolle gemäß Standard H.225 und gemäß Standard H.245. Ein Teilnetz 14 des Internets 10 enthält ein Endgerät 16, das ein H.323-Terminal ist, und eine Netzzugangseinheit 18, die auch als Gatekeeper bezeichnet wird. Eine Netzübergangseinheit 20 bildet eine Schnittstelle zwischen dem Internet 10 und dem Telefonnetz 12. Die Netzübergangseinheit 20 wird auch als Gateway bezeichnet.

Das Telefonnetz 12 ist beispielsweise das durchschaltevermittelte Telefonnetz der Deutschen Telekom AG und enthält eine Vermittlungsstelle 22, z.B. vom Typ EWSD oder vom Typ Surpass der Firma Siemens AG. Die Vermittlungsstelle 22 wurde um die unten erläuterten Funktionen zum Erbringen des erfindungsgemäßen Verfahrens erweitert.

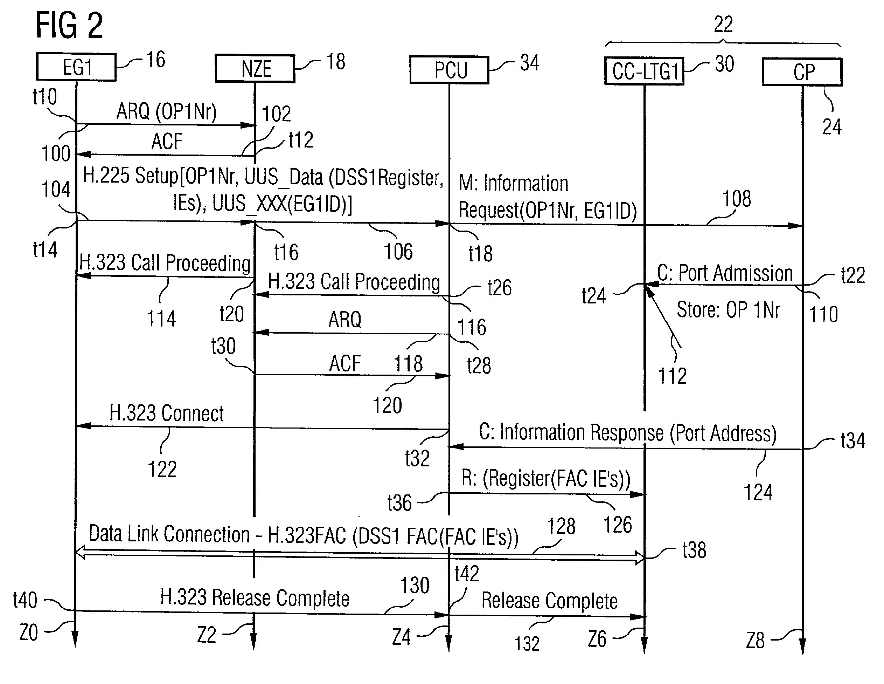

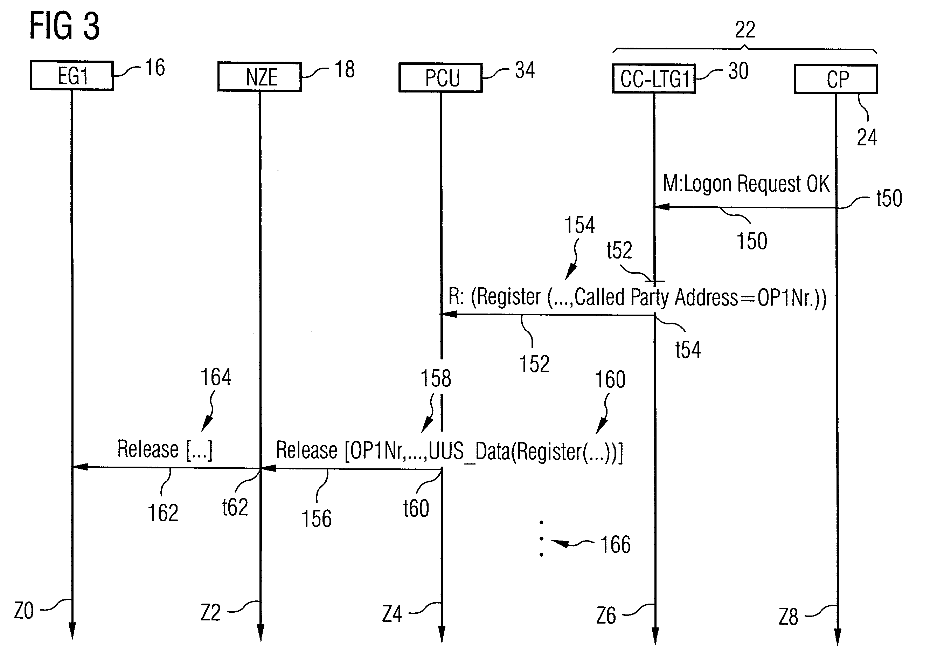

Die Vermittlungsstelle 22 enthält einen Zentralprozessor 24, eine Speichereinheit 26, ein Koppelnetz 28, Anschlussbaugruppen 30 und 32 sowie eine Paketnetzsteuereinheit 34. Der Zentralprozessor 24 übernimmt zentrale Steueraufgaben, die soweit für die Erfindung von Bedeutung unten im Zusammenhang mit den Figuren 2 und 3 näher erläutert werden. In der Speichereinheit 26 sind Programme gespeichert, die zur Ausführung zentraler Steueraufgabe benötigt werden. Außerdem sind in der Speichereinheit 26 Datensätze 36 und 38 gespeichert, die in dieser Reihenfolge einem Operator OP1 und einen Operator OP2 zugeordnet sind, die in eine Anrufverteilung einbezogen werden können. In den Datensätzen 36, 38 sind Daten gespeichert, welche die Leistungsmerkmale angeben, die von den Operatoren OP1 bzw. OP2 insbesondere im Rahmen der Anrufverteilung genutzt werden können.

Im Koppelnetz 28 werden unter Steuerung des Zentralprozessors 24 Übertragungskanäle verschaltet, die von den Anschlussbaugruppen 30 bzw. 32 kommen bzw. zu diesen Anschlussbaugruppen führen.

Die Anschlussbaugruppe 30 wird auch als Line Trunk Group (LTG) bezeichnet und enthält eine lokale Steuereinheit und eine lokale Speichereinheit, die jedoch in Figur 1 nicht dargestellt sind. Auf der Anschlussbaugruppe 30 gibt es Diensterbringungsprogramme 40 bis 44, die jeweils einem Endgerät zugeordnet sind. Ein erstes Diensterbringungsprogramm 40 ist beispielsweise einem Telefon 46 zugeordnet. Das Endgerät 46 ist über eine ISDN-Teilnehmerleitung 48 (Integrated Services Digital Network) mit der Anschlussbaugruppe 30 verbunden. Auf dem Endgerät 46 wird ein sogenanntes Konsolenprogramm ausgeführt. Das Diensterbringungsprogramm 44 erbringt Funktionen des Dienstes "Anrufverteilung" für das Endgerät 16.

Eine Übertragungsleitung 50 führt von der Anschlussbaugruppe 30 zur Netzübergangseinheit 20. Über die Übertragungsleitung 50 ist das Endgerät 16 erreichbar. Die Anschlussbaugruppe 32 dient zum Anschluss weiterer Endgeräte, unter anderem auch zum Anschluss von Endgeräten, die in die Anrufverteilung einbezogen werden.

Die Paketnetzsteuereinheit 34 ist über eine Übertragungsleitung 52 mit der Netzzugangseinheit 18 verbunden. Die Funktionen der Paketnetzsteuereinheit 34 werden unten im Zusammenhang mit den Figuren 2 und 3 näher erläutert.

Im Internet 10 werden auf höheren Protokollebenen die folgenden Protokolle zur Datenübertragung eingesetzt:
- zwischen dem Endgerät 16 und der Netzübergangseinheit 20 das Protokoll RTP (Transport Protocol for Real-Time Applications) der IETF (Internet Engineering Task Force), siehe gestrichelte Linie 60,
- zwischen dem Endgerät 16 und der Netzzugangseinheit 18 das Protokoll gemäß Standard H.225 der ITU-T, siehe gestrichelte Linie 62,
- zwischen der Netzübergangseinheit 20 und der Netzzugangseinheit 18 das Protokoll gemäß Standard H.245 der ITU-T, siehe gestrichelte Linie 64, und
- zwischen der Netzübergangseinheit 20 und der Paketnetzsteuereinheit 34 das Protokoll MGCP (Media Gateway Control Protocol) der IETF (Internet Engineering Task Force), siehe gestrichelte Linie 66.

Es lassen sich jedoch auch andere Protokolle einsetzen, beispielsweise an Stelle des Protokolls H.225 das Protokoll SIP (Session Initiation Protocol) bzw. an Stelle des Protokolls MGCP das Protokoll gemäß Standard H.248.

Eine Anrufverteilfunktion wird mit Hilfe des Zentralprozessors 24 und mit Hilfe von Diensterbringungsprogrammen 40 bis 46 erzeugt, die auf den Anschlussbaugruppen 30 und 32 ausgeführt werden. Im Ausführungsbeispiel nutzt der Operator OP1 zunächst das Endgerät 16 im Rahmen der Anrufverteilung. Der Operator OP2 nutzt dagegen zunächst das Endgerät 46. Jedem Operator OP1, OP2 ist eine Operatornummer OP1Nr bzw. OP2Nr zugeordnet, in der auch eine Rufnummer enthalten ist, unter der der jeweilige Operator OP1 bzw. OP2 im Rahmen der Anrufverteilung erreichbar sein soll. Die Operatornummer OP1Nr bzw. OP2Nr enthält beispielsweise eine Rufnummer, die den Standard E.164 der ITU-T erfüllt. Dem Endgerät 16 wurde außerdem eine Endgerätenummer EG1ID zugeordnet, die in einer Speichereinheit 70 des Endgerätes 16 gespeichert ist. Die Endgerätenummer EG1ID kennzeichnet das Endgerät 16 eindeutig und wurde in der Vermittlungsstelle 22 beim Registrieren der jeweiligen Konsolenprogramme nur einmal vergeben. Außerdem enthält das Endgerät 16 einen Prozessor 72 und eine Sende- und Empfangseinheit 74.

Dem Endgerät 46 ist dagegen keine Endgerätenummer EGID zugeordnet, weil das Endgerät 46 über eine Teilnehmerleitung 48 an die Anschlussbaugruppe 30 angeschlossen ist. Damit ist das Diensterbringungsprogramm 40 als Empfänger der vom Endgerät 46 kommenden Signalisierungsdaten festgelegt. Das Verfahren zum Bestimmen des Anschlusses 44 als Empfänger der vom Endgerät 16 kommenden Signalisierungsdaten wird unten an Hand der Figuren 2 und 3 näher erläutert.

Die Operatoren OP1 und OP2 haben jedoch die Möglichkeit der freien Platzwahl, so dass sie wahlweise das Endgerät 46 oder das Endgerät 16 benutzen können. Der Operator OP1 bzw. OP2 führt jeweils eine Anmeldevorgang aus, in welchem er sich identifiziert und beispielsweise nach der Eingabe eines Passwortes eine Zugriffsberechtigung bekommt. Die mit dem Anmeldevorgang verbundenen Vorgänge werden ebenfalls unten an Hand der Figur 2 erläutert.

Figur 2 zeigt Nachrichten, die bei der Anmeldung des Operators OP1 beim Rufverteilungsprogramm, insbesondere beim Diensterbringungsprogramm 44, ausgeführt werden. Zeitstrahlen Z0, Z2, Z4, Z6 und Z8 sind in dieser Reihenfolge Vorgängen zugeordnet, die sich auf das Endgerät 16, die Netzzugangseinheit 18, die Paketnetzsteuereinheit 34, die Anschlussbaugruppe 30 bzw. den Zentralprozessor 24 beziehen. Gleiche Zeitpunkte sind auf den Zeitstrahlen Z0 bis Z8 auf gleicher Höhe dargestellt. Frühere Zeitpunkte sind weiter oben dargestellt als spätere Zeitpunkte.

Der Operator OP1 setzt sich an das Endgerät 10 und startet ein Konsolenprogramm, mit dessen Hilfe er in einer Rufverteilung einbezogen werden kann. Das Konsolenprogramm fordert ihn auf, seine Operatornummer OP1Nr einzugeben.

Zu einem Zeitpunkt t10 erzeugt das Endgerät 16 eine Zugriffsanforderungsnachricht 100, die auch als ARQ (Admission Request) bezeichnet wird. Die Zugriffsanforderungsnachricht 100 ist an die Netzzugangseinheit 18 gerichtet und enthält die Operatornummer OP1Nr, die mit einer Rufnummer übereinstimmt, unter der das Endgerät 16 im Rahmen der Rufverteilung erreichbar sein soll.

Die Netzzugangseinheit 18 beantwortet die Zugriffsanforderungsnachricht 100 protokollgemäß zu einem Zeitpunkt t12 mit einer Zugriffsbestätigungsnachricht 102. Die Zugriffsbestätigungsnachricht 102 wird auch als ACF (Admission Confirm) bezeichnet und ist an das Endgerät 16 gerichtet.

Das Endgerät 16 erzeugt zu einem Zeitpunkt t14 eine Verbindungsaufbaunachricht 104, die auch als Setup-Nachricht bezeichnet wird und die Operatornummer OP1Nr enthält. Außerdem enthält die Verbindungsaufbaunachricht 104 in einem Datenfeld UUS_Data eine Registriernachricht gemäß dem Teilnehmersignalisierungsprotokoll DSS1 (Digital Signalling System Number One). Die Registriernachricht enthält Informationselemente, mit deren Hilfe eine Registrierung im Rahmen der Rufverteilung angefordert wird. Im Internet 10 wird das Datenfeld UUS_Data nicht ausgewertet. Weiterhin enthält die Verbindungsaufbaunachricht 104 ein Datenfeld UUS_XXX, in dem die Endgerätenummer EG1ID enthalten ist. Das Datenfeld UUS_XXX wird im Internet 10 ebenfalls nicht ausgewertet, sondern transparent übertragen. Die Verbindungsaufbaunachricht 104 ist an die Netzzugangseinheit 18 gerichtet. Das Datenfeld UUS_Data wird gemäß Standard H.225.0 als nonStandardData bezeichnet. Das Datenfeld UUS_XXX wird dagegen gemäß Standard H.225.0 als nonStandardControl bezeichnet.

Die Netzzugangseinheit 18 leitet die Verbindungsaufbaunachricht 104 als Verbindungsaufbaunachricht 106 im Wesentlichen unverändert zu einem Zeitpunkt t16 an die Paketnetzsteuereinheit 34 weiter. Eine Vermittlung wird von der Netzzugangseinheit 18 nicht durchgeführt, da die Paketnetzsteuereinheit 34 der Netzzugangseinheit 18 fest zugeordnet ist.

Die Paketnetzsteuereinheit 34 liest die Datenfelder UUS_Data und UUS_XXX. Aufgrund des Inhalts dieser Datenfelder erzeugt die Paketnetzsteuereinheit 34 zu einem Zeitpunkt t18 eine Informationsanforderungsnachricht 108, welche die Operatornummer OP1Nr und das Endgerätekennzeichen EG1ID enthält. Die Informationsanforderungsnachricht 108 wird zu einem Zeitpunkt t18 an den Zentralprozessor 24 gesendet. Der Zentralprozessor 24 veranlasst die Bearbeitung der Informationsanforderungsnachricht 108 und bestimmt dabei auch eine freie Zeitlage auf der Übertragungsleitung 50. Mit Hilfe einer in der Speichereinheit 26 gespeicherten Tabelle und mit Hilfe des Endgerätekennzeichens EG1ID ermittelt der Zentralprozessor 24 das Diensterbringungsprogramms 44 als das Diensterbringungsprogramms, das dem Endgerät 16, d.h. dem Endgerät mit dem Endgerätekennzeichen EG1ID, zugeordnet worden ist. Die Adresse des Diensterbringungsprogramms 44 bzw. ein Kennzeichen für das Diensterbringungsprogramms 44 enthält auch ein Kennzeichen für die Anschlussbaugruppe 30. Deshalb richtet der Zentralprozessor 24 zu einem Zeitpunkt t22 eine Belegungsnachricht 110 an die Anschlussbaugruppe 30, mit deren Hilfe das Diensterbringungsprogramm 44 aufgerufen wird. Außerdem enthält die Belegungsnachricht 110 die Operatornummer OP1Nr. Die Operatornummer OP1Nr wird zu einem Zeitpunkt t24 in der Anschlussbaugruppe 30 als zum Diensterbringungsprogramm 44 gehörend gespeichert. Das Speichern der Operatornummer OP1Nr wird in Figur 2 durch einen Pfeil 112 verdeutlicht. Auch der Zentralprozessor 24 vermerkt, dass aktuell zu der Operatornummer OP1Nr das Diensterbringungsprogramm 44 gehört.

Zwischenzeitlich erzeugt die Netzzugangseinheit 18 zu einem Zeitpunkt t20 als weitere Reaktion auf die Verbindungsaufbaunachricht 104 eine Fortsetzungsnachricht 114, mit deren Hilfe dem Endgerät 16 signalisiert wird, dass die Netzzugangseinheit 18 eine Signalisierungsverbindung aufbaut. Die Fortsetzungsnachricht 114 wird auch als Call-Proceeding-Nachricht bezeichnet.

Auch die Paketnetzsteuereinheit 34 erzeugt als weitere Reaktion auf die Verbindungsaufbaunachricht 106 eine Fortsetzungsnachricht 116, mit deren Hilfe der Netzzugangseinheit 18 signalisiert wird, dass auch die Paketnetzsteuereinheit 34 den Verbindungsaufbau veranlasst hat. Zu einem Zeitpunkt t28 erzeugt die Paketnetzsteuereinheit 34 standardgemäß eine Zugriffsanforderungsnachricht 118, die auch als ARQ-Nachricht bezeichnet wird und die an die Netzzugangseinheit 18 gerichtet ist. Die Netzzugangseinheit 18 bestätigt die Zugriffsberechtigung zu einem Zeitpunkt t30 mit einer Zugriffsbestätigungsnachricht 120. Nach dem Empfang der Zugriffsbestätigungsnachricht 120 besteht eine Signalisierungsverbindung zwischen der Paketnetzsteuereinheit 34 und dem Endgerät 16. Deshalb sendet die Paketnetzsteuereinheit 34 zu einem Zeitpunkt t32 standardgemäß eine Verbindungsnachricht 122 an das Endgerät 16. Die Verbindungsnachricht 122 wird auch als Connect-Nachricht bezeichnet.

Zu einem Zeitpunkt t34 erzeugt der Zentralprozessor 24 eine Informationsantwortnachricht 124 für die Paketnetzsteuereinheit 34. Die Informationsantwortnachricht wird auch als Information-Response-Nachricht bezeichnet und enthält die Adresse des Diensterbringungsprogramms 44.

Die Paketnetzsteuereinheit 34 ist aufgrund der in der Informationsantwortnachricht 124 übermittelten Diensterbringungsprogrammadresse des Diensterbringungsprogramms 44 in der Lage, die mit der Verbindungsaufbaunachricht 106 empfangene Registrieranforderung an die Anschlussbaugruppe 30 zu senden. Zu diesem Zweck wird zu einem Zeitpunkt t36 eine Registriernachricht 126 an die Anschlussbaugruppe 30 gesendet, in der auch die in der Verbindungsaufbaunachricht 106 enthaltenen Informationselemente der Registriernachricht angegeben sind.

Bei der Auswertung der Registriernachricht 126 in der Anschlussbaugruppe 30 durch das Diensterbringungsprogramm 44 wird festgestellt, dass ein Anmeldevorgang im Rahmen der Rufverteilung angefordert wird. Aufgrund der Zuordnung von Diensterbringungsprogramm 44 und Endgerät 16 ist auch bekannt, dass die Paketnetzsteuereinheit 34 in die Signalisierung einzubeziehen ist. Somit besteht eine Signalisierungsverbindung 118 zwischen der Anschlussbaugruppe 30 und dem Endgerät 16. Die Anschlussbaugruppe 30 sendet über die Signalisierungsverbindung 118 Nachrichten, die auch an das Endgerät 46 im Rahmen einer Anmeldung für die Rufverteilung zu senden wären. Die Nachrichten werden von der Paketnetzsteuereinheit 34 transparent zum Endgerät 16 übertragen und dort ausgewertet.

Im Ausführungsbeispiel wird zunächst über die Signalisierungsverbindung 118 nur signalisiert, dass das Anmeldeverfahren fehlerfrei eingeleitet worden ist. Die dabei ausgeführten Verfahrensschritte werden unten an Hand der Figur 3 näher erläutert.

Nach dem Empfang einer Bestätigung für die fehlerfreie Einleitung des Anmeldevorgangs erzeugt das Endgerät 16 zu einem Zeitpunkt t40 eine Auslösebestätigungsnachricht 130, die an die Paketnetzsteuereinheit 34 gerichtet ist. Die Auslösebestätigungsnachricht 130 wird auch als Release-Complete-Nachricht bezeichnet. Die Paketnetzsteuereinheit 34 erzeugt aufgrund des Empfangs der Auslösebestätigungsnachricht 130 zu einem Zeitpunkt t42 ihrerseits eine Auslösebestätigungsnachricht 132, die an die Anschlussbaugruppe 30 gerichtet ist, genauer gesagt, an das Diensterbringungsprogramm 44.

Figur 3 zeigt Nachrichten, die den Empfang einer Anforderung zur Einleitung eines Anmeldevorgangs bestätigen. Der Zentralprozessor 24 erzeugt zu einem Zeitpunkt t50 eine Bestätigungsnachricht 150, die an die Anschlussbaugruppe 30, genauer gesagt an das Diensterbringungsprogramm 44, gerichtet ist. Die Bestätigungsnachricht 150 wird auch als LogonRequestOK-Nachricht bezeichnet. Beim Bearbeiten der Bestätigungsnachricht 150 in der Anschlussbaugruppe 30 liest das Diensterbringungsprogramm 44 zu einem Zeitpunkt t52 die für Diensterbringungsprogramm 44 gespeicherte Rufnummer, d.h. die Operatornummer OP1Nr. Zu einem Zeitpunkt t54 erzeugt das Diensterbringungsprogramm 44 eine Registriernachricht 152, mit deren Hilfe die fehlerfreie Einleitung des Anmeldevorgangs bestätigt wird, siehe Datenfelder 154. Außerdem enthält die Registriernachricht 152 ein Datenfeld, in dem die Operatornummer OP1Nr als anzurufende Rufnummer angegeben ist. Die Registriernachricht 152 wird an die Paketnetzsteuereinheit 34 gerichtet.

Die Paketnetzsteuereinheit 34 erzeugt beim Bearbeiten der Registriernachricht 152 eine Auslösenachricht 156, die auch als Release-Nachricht bezeichnet wird. Als Ziel der Auslösenachricht 156 wird die Operatornummer OP1Nr angegeben. Außerdem enthält die Auslösenachricht 156 weitere standardgemäße Datenfelder 158. In einem Datenfeld UUS_Data wird die Registriernachricht 152 einschließlich ihrer Datenfelder 160 in transparenter Form übertragen. Die Auslösenachricht 156 ist an die Netzzugangseinheit 18 gerichtet.

Beim Bearbeiten der Auslösenachricht 156 erzeugt die Netzzugangseinheit 18 zu einem Zeitpunkt t62 ebenfalls eine Auslösenachricht 162, die im Wesentlichen die gleichen Datenfelder 164 wie die Auslösenachricht 156 enthält. Beim Bearbeiten der Auslösenachricht 162 im Endgerät 16 werden die bereits oben erläuterten Verfahrensschritte zum Erzeugen der Auslösebestätigungsnachricht 130 ausgeführt.

Durch Punkte sind in Figur 3 weitere Verfahrensschritte 166 angedeutet, mit denen die Einbeziehung des Endgerätes 16 in die Rufverteilung ausgeführt wird. Dabei werden unter anderem vom Zentralprozessor 24 die Daten des Datensatzes 36, d.h. die Daten des dem Operator OP1 zugeordneten Datensatzes, zu dem Diensterbringungsprogramm 44 übertragen, d.h. zu dem Diensterbringungsprogramm, das die Anrufverteilung für das Endgerät 16 ausführt. Die Daten des Datensatzes 36 werden auf der Anschlussbaugruppe 30 als Konfigurationsdaten des Diensterbringungsprogramms 44 gespeichert. Das Diensterbringungsprogramm 44 veranlasst die Übertragung der Daten des Datensatzes 36 zum Endgerät 16. Die fehlerfreie Übertragung der Daten wird von der Seite des Endgerätes 16 bestätigt. Bei jeder nachfolgenden Signalisierung wird das Endgerätekennzeichen EG1ID ebenfalls vom Endgerät EG1 zur Vermittlungsstelle 22 übermittelt, um die Zuordnung der Nachrichten zum Diensterbringungsprogramm 44 zu ermöglichen.

Werden im Rahmen der Rufverteilung Anrufe zum Diensterbringungsprogramm 44 weitergeleitet, so lässt sich eine Verbindung zum Übertragen von Gesprächsdaten über die Übertragungsleitung 50 und das Internet 10 zum Endgerät 16 aufbauen, siehe gestrichelte Linie 60. Zum Aufbau der Verbindung zum Übertragen von Nutzdaten werden die erforderlichen Signalisierungen von der Paketnetzsteuereinheit 34 und von der Netzzugangseinheit 18 veranlasst, siehe gestrichelte Linien 64 und 66 in Figur 1.

Ist der Operator OP1 nicht mehr zu einer Rufannahme im Rahmen der Anrufverteilung bereit, so meldet er sich beim Rufverteilungsprogramm wieder ab. Bei der nächsten Anmeldung hat er wieder eine freie Platzwahl und wählt beispielsweise das Endgerät 46 als Arbeitsplatz, um Anrufe im Rahmen der Anrufverteilung entgegenzunehmen.

Bei einem anderen Ausführungsbeispiel hat das Endgerät 16 über einen sogenannten Internet-Service-Provider einen Anschluss zum Internet. Das bedeutet, dass das Endgerät 16 nicht eine feste Internetadresse hat, sondern eine bei jeder Einwahl in das Internet 10 automatisch vergebene Internetadresse. Aber auch in diesem Fall lässt sich aufgrund des immer gleichbleibenden Endgerätekennzeichens EG1ID das oben erläuterte Verfahren unverändert ausführen.

## Patentansprüche

1. Verfahren zum Ermitteln eines Diensterbringungsprogramms (44),
bei dem einem Endgerät (16) ein Kennzeichen (EG1ID) zugeordnet wird, das unabhängig von einer das Endgerät (16) bedienenden Bedienperson (OP1, OP2) ist,
bei dem das Kennzeichen (EG1ID) vom Endgerät (16) zu einer vermittlungstechnischen Einrichtung (22) übertragen wird,
bei dem abhängig von dem Kennzeichen (EG1ID) in einer vermittlungstechnischen Einrichtung (22) ein Diensterbringungsprogramm (44) ermittelt wird, das mindestens einen Kommunikationsdienst für das Endgerät (16) erbringt,
und bei dem für das Diensterbringungsprogramm (44) abhängig von der das Endgerät (16) bedienenden Bedienperson (OP1, OP2) Einstellungen vorgenommen werden.

2. Verfahren nach Anspruch 1, **dadurch gekennzeichnet, dass** die Bedienperson (OP1, OP2) das Endgerät (16) unter mindestens zwei Endgeräten (16, 46) auswählt, für die sie eine freie Platzwahl bei der Nutzung des Kommunikationsdienstes hat.

3. Verfahren nach Anspruch 2, **dadurch gekennzeichnet, dass** der Kommunikationsdienst eine Anrufverteilfunktion betrifft, die unter einer Sammelrufnummer eintreffende Anrufe an mindestens ein Endgerät (16) einer Gruppe von Endgeräten (16, 46) weiterleitet, wobei auch das durch die Bedienperson (OP1) genutzte Endgerät (16) zu der Gruppe gehört.

4. Verfahren nach einem der vorhergehenden Ansprüche, **dadurch gekennzeichnet, dass** in der vermittlungstechnischen Einrichtung (22) zur Erbringung des Kommunikationsdienstes ein Übertragungskanal mit einem anderen Übertragungskanal verschaltet (28) wird, der von dem Endgerät (16) kommt oder der zu dem Endgerät (16) führt, und dass das Endgerät (16) ein Endgerät (16) eines Datenpaketübertragungsnetzes (10) ist, zu dem bei der Erbringung des Kommunikationsdienstes mit Hilfe des Diensterbringungsprogramm (44) unter Zwischenschaltung einer Netzübergangseinheit (20) Nutzdaten, vorzugsweise Gesprächsdaten, gesendet werden und/oder dass bei der Nutzung des Kommunikationsdienstes Nutzdaten, vorzugsweise Gesprächsdaten, zu dem Diensterbringungsprogramm (44) unter Zwischenschaltung der Netzübergangseinheit (20) sendet.

5. Verfahren nach einem der vorhergehenden Ansprüche, **dadurch gekennzeichnet, dass** das Diensterbringungsprogramm (44) eine Instanz eines Programms ist.

6. Verfahren nach einem der vorhergehenden Ansprüche, **dadurch gekennzeichnet, dass** vom Endgerät (16) zu der vermittlungstechnischen Einrichtung (22) ein Rufkennzeichen (OP1Nr) übertragen wird, unter dem das Endgerät (16) erreichbar ist,
und dass das übertragene Rufkennzeichen (OP1Nr) dem ermittelten Diensterbringungsprogramm (44) zugeordnet wird,
und/oder dass das Rufkennzeichen (OP1Nr) der Bedienperson (OP1) zugeordnet wird.

7. Verfahren nach einem der vorhergehenden Ansprüche, **dadurch gekennzeichnet, dass** an das ermittelte Diensterbringungsprogramm (44) eine von dem Endgerät (16) kommende Signalisierungsnachricht (126) weitergeleitet wird.

8. Verfahren nach einem der vorhergehenden Ansprüche, **dadurch gekennzeichnet, dass** das Kennzeichen (EG1ID) im Endgerät (16) gespeichert wird (70),
und/oder dass das Kennzeichen (EG1ID) im Zusammenhang mit einem Anmeldevorgang der Bedienperson (OP1) zur Nutzung des Kommunikationsdienstes zu der vermittlungstechnischen Einrichtung (22) übertragen wird.

9. Verfahren nach einem der Ansprüche 4 bis 8, **dadurch gekennzeichnet, dass** das Kennzeichen (EG1ID) im Datenpaketübertragungsnetz (10) in einem Signalisierungsdatum übertragen wird, das im Datenpaketübertragungsnetz (10) nicht ausgewertet wird.

10. Verfahren nach Anspruch 9, **dadurch gekennzeichnet, dass** das Kennzeichen (EG1ID) in einer Signalisierungsnachricht gemäß Standard H.225 oder gemäß einem auf diesem Standard aufbauenden Standard in einem Datenelement übertragen wird, das für eine Benutzer-zu-Benutzer-Kommunikation vorgesehen ist, vorzugsweise in einem Datenelement mit dem Namen nonStandardData oder nonStandardControl.

11. Verfahren nach einem der vorhergehenden Ansprüche, **dadurch gekennzeichnet, dass** das Kennzeichen (EG1ID) eine Identifikation für ein im Endgerät (16) zum Nutzen des Kommunikationsdienstes dienendes Programm und/oder für eine im Endgerät (16) genutzte Schaltungseinheit ist.

12. Endgerät (16),
mit einer Sendeeinheit (74) zum Senden eines Kennzeichens (EG1ID) zu einer vermittlungstechnischen Einrichtung (22), und mit einer Steuereinheit (72), die Signalisierungsnachrichten erzeugt, die durch die Sendeeinheit (74) versendet werden,
**dadurch gekennzeichnet, dass** die Steuereinheit (72) eine Signalisierungsnachricht (104) erzeugt, die für das Endgerät (16) ein Kennzeichen enthält, das unabhängig von einer das Endgerät (16) bedienenden Bedienperson (OP1, OP2) ist, und mit dessen Hilfe in einer vermittlungstechnischen Einrichtung (22) ein Diensterbringungsprogramm (44) ermittelt wird, das mindestens einen Kommunikationsdienst für das Endgerät (16) erbringt.

13. Endgerät (16) nach Anspruch 12, **dadurch gekennzeichnet, dass** das Endgerät (16) mindestens eine weitere Einheit enthält, welche die Ausführung eines Verfahrens nach einem der Ansprüche 1 bis 11 ermöglicht.

14. Vermittlungstechnische Einrichtung (22) zum Ermitteln eines Anschlusses (44),
mit einem Diensterbringungsprogramm (44), das mindestens einen Kommunikationsdienst für ein Endgerät (16) erbringt,
mit einer Empfangseinheit (34), die Signalisierungsnachrichten empfängt,
und mit einer Steuereinheit (24, 30), welche die empfangenen Signalisierungsnachrichten bearbeitet,
**dadurch gekennzeichnet, dass** die Steuereinheit (24, 30) ein über die Empfangseinheit (34) empfangenes Kennzeichen (EG1ID) auswertet, das dem Endgerät (16) zugeordnet worden ist und das unabhängig von einer das Endgerät (16) bedienenden Bedienperson (OP1, OP2) ist,
und dass die Steuereinheit (24, 30) abhängig von dem Kennzeichen (EG1ID) das Diensterbringungsprogramm (44) ermittelt.

15. Vermittlungstechnische Einrichtung (22) nach Anspruch 14, **dadurch gekennzeichnet, dass** die vermittlungstechnische Einrichtung (22) mindestens eine weitere Einheit enthält, die die Ausführung eines Verfahrens nach einem der Ansprüche 1 bis 11 ermöglicht.

16. Programm mit einer Befehlsfolge, die von einem Prozessor (24, 32) ausführbar ist, **dadurch gekennzeichnet, dass** bei der Ausführung des Programms die auf das Endgerät (16) bezogenen oder die auf die vermittlungstechnische Einrichtung (22) bezogenen Verfahrensschritte eines Verfahrens nach einem der Ansprüche 1 bis 11 ausgeführt werden.
